(19) **Europäisches Patentamt / European Patent Office / Office européen des brevets**

(11) **EP 3 029 582 A1**

(12) **EUROPEAN PATENT APPLICATION**
published in accordance with Art. 153(4) EPC

(43) Date of publication:
**08.06.2016 Bulletin 2016/23**

(21) Application number: **14832354.6**

(22) Date of filing: **17.03.2014**

(51) Int Cl.:
**G06F 17/30** (2006.01)

(86) International application number:
**PCT/JP2014/057097**

(87) International publication number:
**WO 2015/015826 (05.02.2015 Gazette 2015/05)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **31.07.2013 JP 2013159645**

(71) Applicant: **Ubic, Inc.
Minato-ku, Tokyo 108-0075 (JP)**

(72) Inventors:
- **MORIMOTO Masahiro
  Tokyo 108-0075 (JP)**
- **SHIRAI Yoshikatsu
  Tokyo 108-0075 (JP)**
- **TAKEDA Hideki
  Tokyo 108-0075 (JP)**
- **HASUKO Kazumi
  Tokyo 108-0075 (JP)**
- **HANATANI Akiteru
  Tokyo 108-0075 (JP)**

(74) Representative: **Hoefer & Partner Patentanwälte mbB
Pilgersheimer Straße 20
81543 München (DE)**

(54) **DOCUMENT CLASSIFICATION SYSTEM, DOCUMENT CLASSIFICATION METHOD, AND DOCUMENT CLASSIFICATION PROGRAM**

(57) To provide a document classification system, a document classification method, and a document classification program capable of reducing the burden on a reviewer.

A document classification system that acquires digital information recorded on multiple computers or servers, analyzing document information included in the acquired digital information, and classifying the document information to make easy use of the document information in a lawsuit includes: an extraction unit for extracting a document group as a data set including a predetermined number of documents from the document information; a classification code accepting unit for accepting classification codes given to the extracted document group by a user based on relation to the lawsuit; a selection unit for classifying the extracted document group by classification code based on the classification codes, and analyzing and selecting a keyword appearing in common in the classified document group; a search unit for searching the document information for the selected keyword; a score calculation unit for calculating a score indicative of relation between a classification code and a document using the search results of the search unit and the analysis results of the selection unit; an automatic classification unit for automatically giving classification codes to the document information based on the score results; and a display control unit for performing control to display, on a screen, the calculation results of the score calculation unit and/or the classification results of the automatic classification unit.

FIG. 1

**Description**

Technical Field

The present invention relates to a document classification system, a document classification method, and a document classification program, and particularly to a document classification system, a document classification method, and a document classification program for document information related to a lawsuit.

Background Art

Conventionally, when a crime or a legal conflict related to computers such as unauthorized access or leakage of confidential information occurs, means or techniques for collecting and analyzing devices, data, or electronic records required for investigation into the cause to reveal the legal evidence thereof have been proposed.

Particularly, in a civil case in the United States, since eDiscovery (electronic discovery) is required, both a plaintiff and a defendant involved in the case are responsible for submitting all related digital information as evidence. Therefore, both must submit digital information recorded in computers and servers as evidentiary materials.

However, with the rapid development and prevalence of IT, since most information is created on computers in the today's business world, a lot of digital information is flooding even within the same company.

Therefore, such a mistake that even confidential digital information, which is not necessarily related to the lawsuit, is included as evidentiary materials can be made in the process of preparation work to submit the evidentiary materials to the court. The submission of confidential document information unrelated to the lawsuit has caused a problem.

In recent years, techniques related to document information in forensic systems have been proposed in Patent Document 1 to Patent Document 3. Patent Document 1 discloses a forensic system, in which a specific individual is selected from at least one or more users included in user information, only digital document information accessed by the specific individual is extracted based on access history information regarding the selected specific individual, additional information indicating whether document files in the extracted digital document information are related to a lawsuit respectively is set, and a document file related to the lawsuit is output based on the additional information.

Patent Document 2 discloses a forensic system, in which recorded digital information is displayed, user-specifying information, indicating to which one of users contained in user information each of multiple document files is related, is set, the set user-specifying information is set to be recorded in a storage unit, at least one or more of the users are selected, a document file in which user-specifying information corresponding to the selected user(s) is set is searched for, additional information indicating whether the searched document file is related to a lawsuit is set through a display unit, and a document file related to the lawsuit is output based on the additional information.

Patent Document 3 discloses a forensic system, in which the specification of at least one or more document files included in digital document information is received, an instruction about which language a specified document file is to be translated into is received, the specified document file is translated into the instructed language, a common document file indicating the same content as the specified document file is extracted from digital document information recorded in a recording unit, the extracted common document file incorporates the translation content of the translated document file to generate translation-related information indicating that the file is translated, and a document file related to a lawsuit is output based on the translation-related information.

Citation List

Patent Documents

Patent Document 1: Japanese Patent Application Laid-Open No. 2011-209930
Patent Document 2: Japanese Patent Application Laid-Open No. 2011-209931
Patent Document 3: Japanese Patent Application Laid-Open No. 2012-32859

Summary of the Invention

Problem to be Solved by the Invention

However, for example, the forensic systems like in Patent Document 1 to Patent Document 3 are to collect vast amounts of document information on users who have used multiple computers and servers.

In classification work to determine whether the vast amounts of digitized document information are appropriate as evidentiary materials for legal proceedings, a user called a reviewer needs to classify the document information one by one while visually checking the document information, and this causes a problem that a large amount of labor is required.

The present invention has been made in view of the above circumstances, and it is an object thereof to provide a document classification system, a document classification method, and a document classification program capable of reducing the burden on the reviewer.

Means for solving the Problems

The document classification system of the present invention is a document classification system that acquires digital information recorded on multiple computers or servers, analyzing document information included in the acquired digital information, and classifying the document information to make easy use of the document information in a lawsuit, including: an extraction unit for extracting a document group as a data set including a predetermined number of documents from the document information; a classification code accepting unit for accepting classification codes given to the extracted document group by a user based on relation to the lawsuit; a selection unit for classifying the extracted document group by classification code based on the classification codes, and analyzing and selecting a keyword appearing in common in the classified document group; a search unit for searching the document information for the selected keyword; a score calculation unit for calculating a score indicative of relation between a classification code and a document using the search results of the search unit and the analysis results of the selection unit; an automatic classification unit for automatically giving classification codes to the document information based on the score results; and a display control unit for performing control to display, on a screen, the calculation results of the score calculation unit and/or the classification results of the automatic classification unit.

The "document" means data including one or more keywords. For example, the document is e-mail, presentation materials, spreadsheet materials, meeting materials, a contract document, an organization chart, or a business plan.

The "keyword" means a character string unit having a certain meaning in a language. For example, when a keyword is selected from a sentence saying "documents are classified," the keyword may be "document" or "classification."

The "classification code" means an identifier used in classifying a document. For example, a classification code may be given according to the type of evidence when document information is used as evidence in a lawsuit.

The "score" means a value obtained by quantatively evaluating the strength of connection with a specific classification code in a certain document. For example, the score calculation unit may calculate a score from a keyword appearing in the document group and the weighting of each keyword. As an example, the weighting can be determined based on the amount of transmitted information on the keyword in each classification code.

Further, the extraction unit in the document classification system of the present invention may perform sampling at random to extract a document group from the document information.

The document classification system of the present invention can be configured such that the search unit has a function of searching for a keyword from document information composed of documents to which no classification code is given, the score calculation unit calculates a score indicative of relation between a classification code and a document using the search results of the search unit and the analysis results of the selection unit, and the automatic classification unit has a function of extracting documents the giving of classification codes of which have not been accepted by the classification code accepting unit, and automatically giving classification codes to the documents.

The document classification system of the present invention may also be configured such that the search unit has a function of searching for a related term from the document information, the score calculation unit has a function of calculating a score based on the results of searching for the related term by the search unit, and the automatic classification unit further has a function of automatically giving classification codes based on the scores calculated using the related term.

The display control unit can divide the scores calculated by the score calculation unit into multiple ranges, and display numbers obtained by accumulating the number of documents included in each range of the multiple ranges in descending order of score.

The display control unit can also display a ratio of documents relevant to the lawsuit to the total number of documents.

Further, the display control unit can divide the scores calculated by the score calculation unit into multiple ranges, and display a ratio of the number of documents relevant to the lawsuit in each range of the multiple ranges.

The document classification system of the present invention can be configured to further include a size estimation unit for estimating the proper size of a document group as a data set including a predetermined number of documents to be extracted from the document information, wherein the extraction unit extracts, from the document information, a document group in a size estimated by the size estimation unit.

The document classification system of the present invention may also be configured to include a number-of-document estimating unit for estimating the number of documents included in the document information and relevant to the lawsuit based on the classification results of the document group accepted by the classification code accepting unit.

The number-of-document estimating unit can estimate the number of documents included in the document information and relevant to the lawsuit based on a ratio of the number of documents to the extracted document group, where the number of documents is determined to be relevant to the lawsuit as a result of the classification.

The document classification system of the present invention may further be configured to include a number-of-document calculating unit for calculating the number of documents required when the user performs confirmation review on the classification results of the document information classified by the automatic classification unit.

The number-of-document calculating unit can calculate the number of documents required for the confirmation review based on a relationship between a document determined to be relevant to the lawsuit by the automatic classification unit and a score calculated by the score calculation unit.

The number-of-document calculating unit can also calculate the number of documents required for the confirmation review based on a relationship between a recall as a ratio of documents, determined to be relevant to the lawsuit by the automatic classification unit, to documents relevant to the lawsuit in the document information, and a normalized rank obtained by dividing the rank of the score calculated by the score calculation unit by the number of documents included in the document information.

The relationship between the recall and the normalized rank can be calculated by nonlinear regression analysis.

The number of documents required for the confirmation review can also be calculated based on a value of the normalized rank in which a value of the recall is saturated when the value of the normalized rank is increased in the relationship between the recall and the normalized rank calculated by the nonlinear regression analysis.

The display control unit can also display, on the screen, the number of documents calculated by the number-of-document calculating unit and required when the user performs confirmation review.

Further, the document classification system of the present invention may be configured to include a document exclusion unit for selecting documents that do not include the keyword selected by the selection unit, the related term, and a keyword having a correlation with a classification code from among the documents included in the document group to exclude the selected documents from classification targets of the automatic classification unit.

The document classification system of the present invention may also include a database having a function of extracting and recording a related term relevant to a classification code. Further, the document classification system may include a learning unit for increasing or decreasing keywords and related terms having a correlation with a classification code selected by the selection unit and recorded in the database based on the analysis results of the selection unit and the scores calculated by the score calculation unit.

The document classification method of the present invention is a document classification method for acquiring digital information recorded on multiple computers or servers, analyzing document information included in the acquired digital information, and classifying the document information to make easy use of the document information in a lawsuit, the method realizing the functions of: extracting a document group as a data set including a predetermined number of documents from the document information; accepting classification codes given to the extracted document group by a user based on relation to the lawsuit; classifying the extracted document group by classification code based on the classification codes, and analyzing and selecting a keyword appearing in common in the classified document group; searching the document information for the selected keyword; calculating a score indicative of relation between a classification code and a document using the search results of the search unit and the analysis results of the selection unit; automatically giving classification codes to the document information based on the score results; and performing control to display, on a screen, the score calculation results and/or classification results of the automatic classification.

The document classification program of the present invention is used in a document classification system that acquires digital information recorded on multiple computers or servers, analyzing document information included in the acquired digital information, and classifying the document information to make easy use of the document information in a lawsuit, the program causing a computer to realize: a function of extracting a document group as a data set including a predetermined number of documents from the document information; a function of accepting classification codes given to the extracted document group by a user based on relation to the lawsuit; a function of classifying the extracted document group by classification code based on the classification codes, and analyzing and selecting a keyword appearing in common in the classified document group; a function of searching the document information for the selected keyword; a function of calculating a score indicative of relation between a classification code and a document using the search results of the search unit and the analysis results of the selection unit; a function of automatically giving classification codes to the document information based on the score results; and a function of performing control to display, on a screen, the score calculation results and/or the classification results of the automatic classification.

Advantageous Effect of the Invention

The document classification system, the document classification method, and the document classification program according to the present invention perform control to display the score calculation results and/or the classification results of the automatic classification. This can reduce the burden on a reviewer.

Brief Description of the Drawings

FIG. 1 is a configuration diagram of a document classification system according to a first embodiment of the present invention.

FIG. 2 is a graph showing a relationship between a sample size and an error level.

FIG. 3 is a graph showing the analysis results obtained by a selection unit in the embodiment of the present invention.

FIG. 4 is a graph showing a fitting result.

FIG. 5 is a chart showing a processing flow in each stage in the embodiment of the present invention.

FIG. 6 is a chart showing a processing flow of a database in the embodiment of the present invention.

FIG. 7 is a chart showing a processing flow of a search unit in the embodiment of the present invention.

FIG. 8 is a chart showing a processing flow of a score calculation unit in the embodiment of the present invention.

FIG. 9 is a chart showing a processing flow of an automatic classification unit in the embodiment of the present invention.

FIG. 10 is a chart showing a processing flow of a sample size estimating unit in the embodiment of the present invention.

FIG. 11 is a chart showing a processing flow of an extraction unit in the embodiment of the present invention.

FIG. 12 is a chart showing a processing flow of a display control unit in the embodiment of the present invention.

FIG. 13 is a chart showing a processing flow of a classification code accepting unit in the embodiment of the present invention.

FIG. 14 is a chart showing a processing flow of a number-of-document estimating unit in the embodiment of the present invention.

FIG. 15 is a chart showing a processing flow of the selection unit in the embodiment of the present invention.

FIG. 16 is a chart showing a processing flow of an endpoint calculation unit in the embodiment of the present invention.

FIG. 17 is a chart showing a processing flow of a document exclusion unit in the embodiment of the present invention.

FIG. 18 is a chart showing a processing flow of a learning unit in the embodiment of the present invention.

FIG. 19 is a document display screen in the embodiment of the present invention.

FIG. 20 is a document display screen in the embodiment of the present invention.

FIG. 21 is a document display screen in the embodiment of the present invention.

FIG. 22 is a document display screen in the embodiment of the present invention.

FIG. 23 is a document display screen in the embodiment of the present invention.

Modes for carrying out the Invention

[First Embodiment]

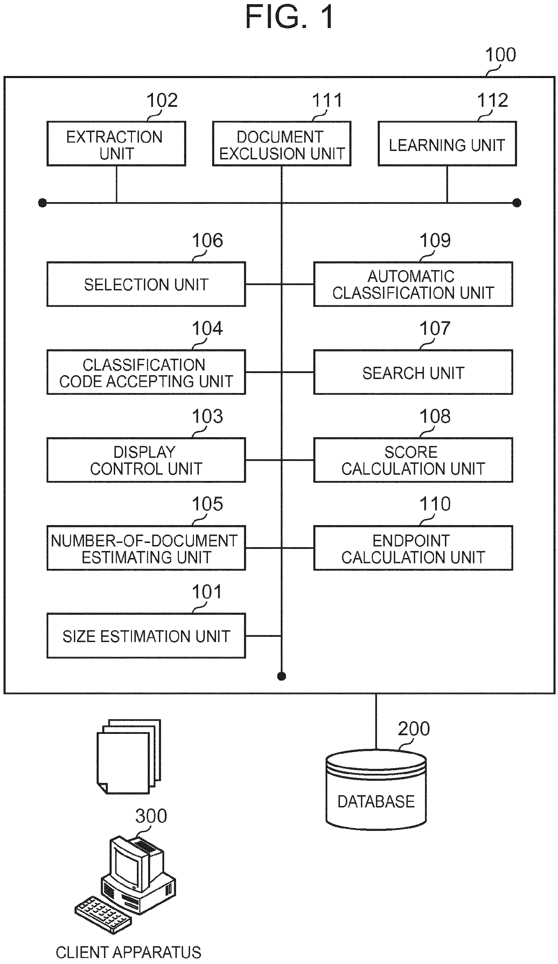

Embodiments of the present invention will be described below with reference to the accompanying drawings. FIG. 1 shows a configuration diagram of a document classification system according to a first embodiment.

The first embodiment is an embodiment when documents on product A as an accused product are classified to follow the court order to submit the documents in a patent infringement suit.

The document classification system according to the present invention includes a size estimation unit 101 for estimating the proper size of a document group as a data set including a predetermined number of documents to be extracted from document information, an extraction unit 102 for extracting the document group as the data set including the predetermined number of documents from the document information, a display control unit 103 for displaying the extracted document group on a screen, a classification code accepting unit 104 for accepting classification codes given to the displayed document group by a user called a reviewer based on the relation to the lawsuit, a number-of-document estimating unit 105 for estimating the number of documents included in the document information and relevant to the lawsuit based on the classification results of the document group accepted by the classification code accepting unit 104, a selection unit 106 for classifying the extracted document group by classification code based on the classification codes, and selecting a keyword appearing in common in the classified document group, a database 200 for recording the selected keyword, a search unit 107 for searching the document information for the keyword recorded in the database 200, a score calculation unit 108 for calculating a score indicative of relation between a classification code and a document using the search results of the search unit 107 and the analysis results of the selection unit 106, an automatic classification unit 109 for automatically giving classification codes based on the score results, and an endpoint calculation unit 110 for calculating the number of documents (endpoint) necessary for the reviewer to review the classification results of the document information classified by the automatic classification unit 109 (hereinafter called "confirmation review").

In the first embodiment, the document classification system is made up of a document classification apparatus 100 including the size estimation unit 101, the extraction unit 102, the display control unit 103, the classification code accepting unit 104, the number-of-document estimating unit 105, the selection unit 106, the search unit 107, the score calculation unit 108, the automatic classification unit 109, the endpoint calculation unit 110, a document exclusion unit 111, and a learning unit 112, the database 200, and a client apparatus 300 used by the reviewer. Two or more client apparatuses 300 can be provided within one document classification system.

The document classification apparatus 100 and the client apparatus 300 are computers or servers in which a CPU executes a program recorded in a ROM based on various input operations to operate as various functional units.

The classification code means an identifier used in classifying a document. The classification code may be given according to the type of evidence when document information is used as evidence in a lawsuit. In the first embodiment, three codes are provided as classification codes, i.e., "Not Relevant" representing a document inadmissible as evidence in this lawsuit, "Relevant" representing a document required to submit as evidence, and "Hot" representing a document particularly involved with the product A, and among them, the documents to which "Hot" is given are classified.

The term "document" here is digital information to be submitted as evidence in the lawsuit, which is data including one or more words. For example, the digital information includes e-mail, presentation materials, spreadsheet materials, meeting materials, a contract document, an organization chart, and a business plan. Further, scan data can also be handled as a document. In this case, an OCR (Optical Character Recognition) device may be included in the document classification system so that the scan data can be converted to text data. The change to the text data using the OCR device enables the analysis of and search for a keyword and a related term from the scan data.

For example, in the first embodiment, the "Relevant" code is given to meeting minutes and e-mail describing the details of a meeting on the product A, the "Hot" code is given to a development plan for and design specifications of the product A, and the "Not Relevant" code is given to materials for a regular meeting irrelevant to the product A or the like.

The keyword means a character string unit having a certain meaning in a language. For example, when a keyword is selected from a sentence saying "documents are classified," the keyword may be "document" or "classification." In the first embodiment, a keyword, such as "infringement," "lawsuit," or "Patent Publication No. xxx" is preferentially selected.

The database 200 is a recording device for recording data on an electronic medium, which may be installed within the document classification apparatus 100 or externally, for example, as a storage device.

The document classification apparatus 100, the database 200, and the client apparatus 300 are connected through a wired or wireless network. A form of cloud computing can also be employed.

The database 200 records keywords on each classification code. Keywords that can be determined to be immediately given the "Hot" code from the past results of classification processing if the keywords have high relation to the product A and are included in the documents can be pre-registered in the database 200. For example, the keywords include the name of a primary function of the product A, and keywords such as "lawsuit," "warning," and "patent publication." It is also possible to extract, from the past results of classification processing, a general term highly relevant to a document group to which the "Hot" code is given because of having high relation to the product A, and to register the general term as a related term. Not only are the keywords and related terms once registered in the database 200 increased or decreased according to the result of learning of the learning unit 112, but also additional registration and deletion can be done manually.

The size estimation unit 101 estimates the proper size of a document group (hereinafter also referred to as samples) as a data set including a predetermined number of documents to be extracted from the document information. The samples to be extracted by the extraction unit 102 to be described later need to be all reviewed by the reviewer. However, when the ratio of extracted documents (hereinafter also referred to as the sample size) to all pieces of document information is high, the reliability of the review results is improved, but the burden on the reviewer is increased. On the other hand, when the ratio of extracted documents is low, the burden on the reviewer is reduced, but the reliability of the review results is reduced. Therefore, there is a need to extract samples in a manner to reduce the burden on the reviewer while keeping the reliability of the review results.

In order to solve the above problem, the size estimation unit 101 estimates the ratio of documents to be extracted from all the pieces of document information, i.e., the sample size in a manner to reduce the burden on the reviewer while keeping the reliability of the review results. The following will describe a method of estimating the sample size by the size estimation unit 101.

The number of documents included in all the pieces of document information is set as N. Further, documents included in all the pieces of document information and relevant to the lawsuit are set as $N_{HOT}$. Here, $N_{HOT}$ is unknown and needs to be estimated. For example, it is assumed that an error level (statistical error) $\Delta p$ allowable for an estimate $p$ (=$N_{HOT}$/N) is 0.01 (1%), for example. It is next assumed that the confidence level (C.L.) of the estimate value $p$ is 95%, for example.

If it is assumed as mentioned above, the error level Δp will be expressed in the following equation (1):

$$\Delta p = \gamma \sqrt{\frac{N - n_s}{N - 1} \frac{p(1 - p)}{n_s}} \quad \cdots \quad (1)$$

When the above equation (1) is arranged using a sample size $n_s$, the following equation (2) is given:

$$n_s = \frac{\gamma^2}{\Delta p^2} \frac{1}{\frac{N-1}{N} \frac{1}{p(1-p)} + \frac{\gamma^2}{N \Delta p^2}} \quad \cdots \quad (2)$$

Note that $\gamma$ in the above equations (1) and (2) is a confidence coefficient for the confidence level (C.L.). When $\gamma=1.96$, the confidence level (C.L.) is 95%, and when $\gamma=2.58$, the confidence level (C.L.) is 99%.

Here, when N is a sufficiently larger value than $n_s$ ($N \gg n_s$), the following equation (3) is established:

$$\frac{N - n_s}{N - 1} \rightarrow 1 \quad \cdots \quad (3)$$

Therefore, the value of $n_s$ is expressed by the following expression (4):

$$n_s \approx \frac{\gamma^2}{\Delta p^2} p(1 - P) \quad \cdots \quad (4)$$

In the above equation (4), the estimate value p is unknown (because $N_{HOT}$ is unknown). However, assuming that the estimate value p is 0.5 (half of all the pieces of document information are documents relevant to the lawsuit) as the worst case (where the value p(1-p) becomes the largest), the above expression (4) becomes the following expression (5), where the estimate value p can be set by the user using the client apparatus 300 to be described later:

$$n_s \approx \frac{1}{4} \frac{\gamma^2}{\Delta p^2} \quad \cdots \quad (5)$$

Next, examples of calculated values of the sample size $n_s$ when the error level Δp is 0.01 (1%) are shown in Table 1. Table 1 shows cases where the confidence level (C.L) is 95% and 99%. As shown in Table 1, the sample size $n_s$ under the condition of $N \gg n_s$ takes on values independent of the number of documents N in all the pieces of document information.

[Table 1]

| Number of Documents N | C.L.=95% | | C.L.=99% | |
|---|---|---|---|---|
| | ns | ns<<N | ns | ns<<N |
| 10,000 | 4,899 | 9,604 | 6,247 | 16,641 |
| 50,000 | 8,058 | 9,604 | 12,486 | 16,641 |
| 100,000 | 8,763 | 9,604 | 14,267 | 16,641 |
| 500,000 | 9,423 | 9,604 | 16,105 | 16,641 |

(continued)

| Number of Documents N | C.L.=95% | | C.L.=99% | |
|---|---|---|---|---|
| | ns | ns<<N | ns | ns<<N |
| 1,000,000 | 9,513 | 9,604 | 16,369 | 16,641 |
| 5,000,000 | 9,586 | 9,604 | 16,586 | 16,641 |

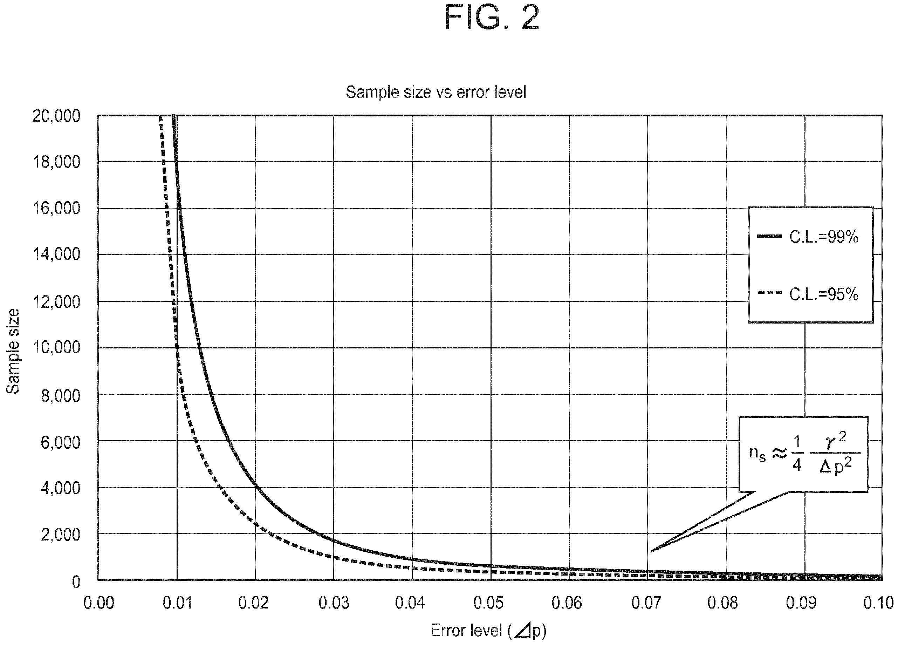

Next, a relationship between the sample size $n_s$ and the error level $\Delta p$ is shown in FIG. 2. In FIG. 2, the ordinate indicates the sample size ($n_s$) and the abscissa indicates the error level $\Delta p$. Note that FIG. 2 shows the cases where the confidence level (C.L.) is 95% and 99%. As shown in FIG. 2, the smaller the value of the error level $\Delta p$, the higher the ratio of extracted documents (sample size $n_s$) to all the pieces of document information.

As mentioned above, the size estimation unit 101 uses the above expression (5) to estimate the ratio of extracted documents (sample size) to all the pieces of document information.

When extracting a document group from the document information, the extraction unit 102 can perform sampling at random. In the first embodiment, documents in the ratio estimated by the size estimation unit 101 are extracted at random from among all the pieces of document information as targets to be classified by the reviewer. The ratio of documents extracted by the extraction unit 102 from all the pieces of document information can be changed manually. When the ratio of documents extracted from all the pieces of document information is set manually, it is preferred to refer to the sample size estimated by the size estimation unit 101.

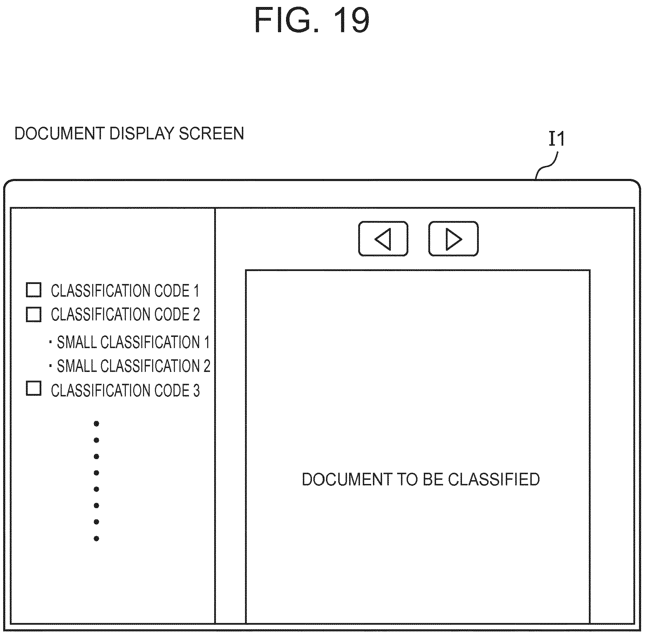

The display control unit 103 provides a document display screen I1 as shown in FIG. 19 to the client apparatus 300. The document display screen I1 can display documents to be classified and classification codes to be given within one screen in such a screen structure that the documents to be classified are displayed in the middle and the classification codes are displayed on the left side as in FIG. 19. The screen structure may be such a screen structure that a part of displaying the documents and a part of displaying the classification codes are different screens, respectively.

In the first embodiment, classification code 1 is the "Not Relevant" code, classification code 2 is the "Relevant" code, and classification code 3 is the "Hot" code in the document display screen I1. Further, among documents to which the "Relevant" code is given, small classification 1 is given to documents relevant to the price of the product A, and small classification 2 is given to documents relevant to the development schedule of the product A. Two or more small classifications may be provided or no small classification may be provided for one classification code.

The classification code accepting unit 104 can give a classification code to each of the documents, visually confirmed by the reviewer to determine the classification code therefor one by one from the document information displayed by the display control unit 103, based on the determination, and classify the document. The document can be classified by the classification code given.

The number-of-document estimating unit 105 estimates the number of documents included in the document information and relevant to the lawsuit based on the classification results of the document group accepted by the classification code accepting unit 104. The following will describe a method of estimating the number of documents by the number-of-document estimating unit 105.

When the number of documents to which the classification code indicative of being relevant to the lawsuit is given by the reviewer from among the documents extracted by the extraction unit 102 is set as $n_{TAG}$, the number of documents $N_{HOT}{}^{est}$ estimated to be relevant to the lawsuit among the number of documents N to be classified in all the pieces of document information is approximated by the following expression (6):

$$N_{HOT}{}^{est} \approx N(p_{TAG} \pm \Delta p) \cdots (6)$$

More precisely, the value of $N_{HOT}{}^{est}$ is expressed in the following equation (7):

$$N_{HOT}{}^{est} = N\left(p_{TAG} \pm \gamma \sqrt{\frac{N-n_s}{N-1} \frac{p_{TAG}(1-p_{TAG})}{n_s}}\right) \cdots (7)$$

where $P_{TAG} = n_{TAG}/n_s$.

In other words, the number of documents $N_{HOT}{}^{est}$ estimated to be relevant to the lawsuit among the number of documents N in all the pieces of document information falls within a range of statistically predetermined confidence levels (C.L.). Next, one example is shown. In this example, the number of documents N in all the pieces of document information is set to 35,929. Further, the number of documents $n_s$ extracted by the extraction unit 102 is set to 3000 ($\Delta p \leq 1.7\%$).

Assuming that documents are extracted at random by the extraction unit 102 and the classification codes are given correctly, the estimated value of $n_{TAG}$ is as follows: $N_{HOT} \approx 8.3$

If $n_s$ is 8, the number of documents $N_{HOT}{}^{est}$ estimated to be relevant to the lawsuit among the number of documents N in all the pieces of document information will be given by the following equation (8):

$$N_{HOT}{}^{est} = 96 \pm 64(32\sim159) \cdot \cdot \cdot \quad (8)$$

Note that the confidence level (C.L.) of the number of documents $N_{HOT}{}^{est}$ in the above equation (8) is 95%.

The values for the number of documents $N_{HOT}{}^{est}$ when the values of $n_{TAG}$ are different are shown in Table 2 below in the cases where the confidence levels (C.L.) are 95% and 99%.

[Table 2]

| $n_{TAG}$ | C.L.=95% | | | C.L.=99% | | |
|---|---|---|---|---|---|---|
|  | Most probable | Min | Max | Most probable | Min | Max |
| 0 | 0 | 0 | 0 | 0 | 0 | 0 |
| 1 | 12 | 1 | 34 | 12 | 1 | 42 |
| 2 | 24 | 2 | 56 | 24 | 2 | 66 |
| 3 | 36 | 3 | 75 | 36 | 3 | 87 |
| 4 | 48 | 4 | 93 | 48 | 4 | 107 |
| 5 | 60 | 10 | 110 | 60 | 5 | 126 |
| 6 | 72 | 17 | 127 | 72 | 6 | 144 |
| 7 | 84 | 24 | 143 | 84 | 7 | 162 |
| 8 | 96 | 32 | 159 | 96 | 12 | 179 |
| 9 | 108 | 40 | 175 | 108 | 19 | 196 |
| 10 | 120 | 49 | 191 | 120 | 26 | 213 |
| 11 | 132 | 57 | 206 | 132 | 34 | 230 |
| 12 | 144 | 66 | 221 | 144 | 41 | 246 |
| 13 | 156 | 75 | 237 | 156 | 49 | 262 |
| 14 | 168 | 84 | 252 | 168 | 57 | 278 |
| 15 | 180 | 93 | 266 | 180 | 65 | 294 |
| 16 | 192 | 102 | 281 | 192 | 74 | 310 |

As mentioned above, the number-of-document estimating unit 105 uses the above equation (8) to estimate the number of documents $N_{HOT}{}^{est}$ estimated to be relevant to the lawsuit among the number of documents N in all the pieces of document information.

The selection unit 106 analyzes the document information classified by the classification code accepting unit 104 to select a keyword frequently appearing in common in document information, to which each of the "Not Relevant," "Relevant," and "Hot" classification codes is given, respectively, as a keyword in the classification code.

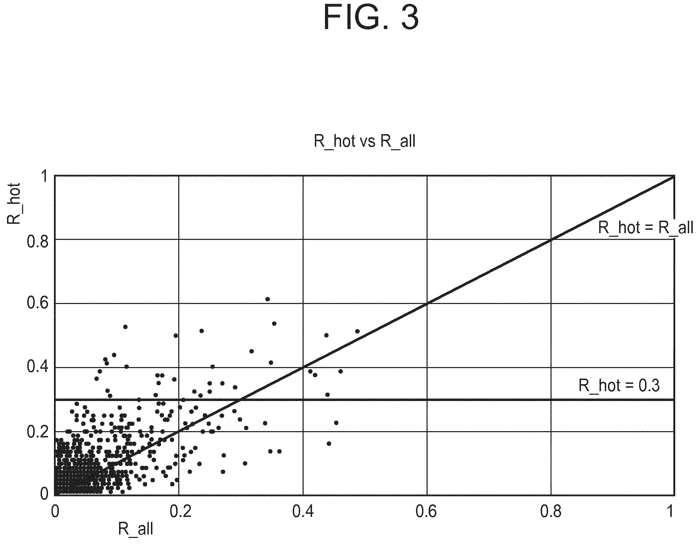

FIG. 3 is a graph showing the analysis results of the selection unit 106 about documents to which the "Hot" code is given.

In FIG. 3, the ordinate R_hot includes keywords selected as keywords linked with the "Hot" code among all documents to which the "Hot" code is given by the reviewer, indicating the ratio of the documents to which the "Hot" code is given. The abscissa indicates the ratio of documents including keywords selected by the selection unit 106 among all the documents on which classification processing has been performed by the reviewer.

In the first embodiment, the selection unit 106 can select keywords plotted above a straight line R_hot=R_all as keywords in the classification code.

The search unit 107 has the function of searching target documents for a specific keyword. The search unit 107 searches a document group composed of documents the giving of classification codes of which have not been accepted by the classification code accepting unit 104 when searching documents including the keywords selected by the selection unit 106 or related terms extracted in the database 200.

The score calculation unit 108 can calculate a score according to the following equation based on the keywords appearing in the document group and the weighting of each keyword, where the score means a value obtained by quantatively evaluating the strength of connection with a specific classification code in a certain document.

$$ Scr = \sum_{i=0}^{N} i * (m_i * wgt_i^2) / \sum_{i=0}^{N} i * wgt_i^2 \quad \cdots \quad (1\,1) $$

$m_i$: the frequency of appearance of the i-th keyword or related term $wgt_i^2$: the weighting of the i-th keyword or related term

The automatic classification unit 109 can also have a function of extracting documents the giving of classification codes of which have not been accepted by the classification code accepting unit 104 when automatically giving classification codes to the document information based on the calculated scores, and automatically giving the classification codes to the documents.

The classification results obtained by the automatic classification unit 109 may be subjected to confirmation review by the reviewer to secure the reliability. However, when the confirmation review is performed on all the classified documents, the burden on the reviewer is heavy and inefficient. On the other hand, when the number of documents on which the confirmation review is performed is small, the burden on the reviewer is reduced, but the reliability of the review results is reduced. Therefore, there is a need to determine the number of documents on which the confirmation review is performed so as to reduce the burden on the reviewer while keeping the reliability of the review results.

The endpoint calculation unit 110 calculates the number of documents (hereinafter also referred to as an endpoint) necessary for the reviewer to perform the confirmation review on the classification results of the document information classified by the automatic classification unit 109. A method of calculating the number of documents by the endpoint calculation unit 110 will be described below.

The calculation of the number of documents made by the endpoint calculation unit 110 can use a "recall rate (recall)" and a "normalized rank," but instead of the recall, a conformance rate or F-value can also be used. The "recall" is an indicator of completeness indicating how many documents among all the documents included in the document information and relevant to the lawsuit are classified by the automatic classification unit 109. For example, when the number of all documents included in the document information and relevant to the lawsuit is 100 and the number of documents classified by the automatic classification unit 109 as being relevant to the lawsuit is 80, the recall is 80%. The "conformance rate" is an indicator of correctness indicating how many documents among the number of documents on which the confirmation review has been performed are classified by the automatic classification unit 109. The F-value is a harmonic mean value of conformance rate and recall.

Further, the "normalized rank" is a rank obtained by normalizing the rank of each document according to the score calculated by the score calculation unit 108. For example, when the number of documents is 100, the normalized rank of a document whose rank according to the score is the 20th is 0.2. When the number of documents is 1000, the normalized rank of a document whose rank according to the score is the two-hundredth is 0.2 as well.

Here, when a nonlinear regression model is used, the recall can be expressed, for example, by the following equation (9):

$$ y = \alpha \frac{1 - e^{\beta x}}{1 + e^{\beta x}} \quad \cdots \quad (9) $$

In the above equation (9), x is the normalized rank, and $\alpha$, $\beta$ are fitting parameters.

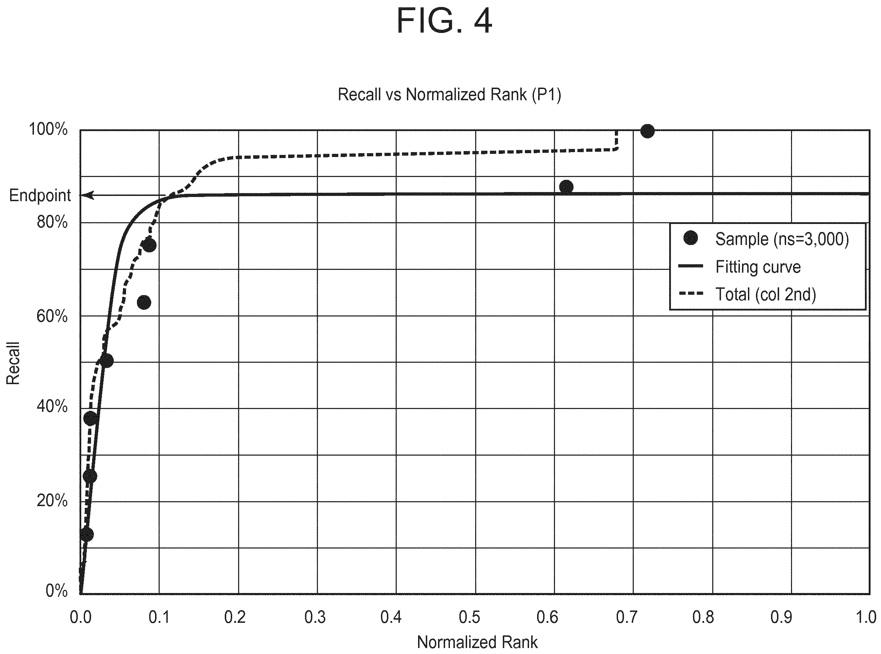

The fitting parameter $\alpha$ approximately coincides with a saturation value of recall. In other words, the saturation recall can be used to determine the endpoint. Note that the equation (9) is just an example, and the endpoint may be determined based on any other regression model. The fitting result according to the equation (9) is shown in FIG. 4.

As shown in FIG. 4, the recall value increases as the normalized rank value is increased. However, when the normalized rank exceeds 0.1 (10%), the recall value becomes so saturated that the recall value will be almost unchanged from 0.864 (84.6%) even if the normalized rank is increased.

In other words, in the example shown in FIG. 4, it means that the recall is almost unchanged even when the confirmation review is performed on any document whose rank is 0.1 or more. Therefore, in the example shown in FIG. 4, documents whose ranks are in the top 10% can be set as the number of documents (endpoint) necessary for use in review to reduce the burden on the reviewer while keeping the reliability of the classification results.

The document exclusion unit 111 can search for documents including none of the keywords and related terms pre-registered in the database 200, and the keywords selected by the selection unit 106 in the document information to be classified to exclude the documents from classification targets beforehand.

The learning unit 112 learns the weighting of each keyword based on the results of classification processing to increase or decrease the keywords and related terms registered in the database 200 based on the learning results. The weighting of each keyword can be determined based on the amount of transmitted information on the keyword in each classification code. The weighting can be learned according to the following equation each time the classification processing is performed to improve the precision:

$$wgt_{i,L} = \sqrt{wgt_{L-i}^2 + \gamma_L wgt_{i,L}^2 - \vartheta} = \sqrt{wgt_{L,i}^2 + \sum_{l=1}^{L}(\gamma_l wgt_{i,l}^2 - \vartheta)} \cdot \cdot \cdot (12)$$

$Wgt_{i,0}$: Weighting of the i-th selected keyword before learning (default)
$Wgt_{i,L}$: Weighting of the i-th selected keyword after the L-th learning
$\gamma_L$: Learning parameter in the L-th learning
$\vartheta$: Threshold value for learning effect

Further, the learning unit can use a learning method for reflecting the classification results on the weighting using a neural network.

The client apparatus 300 is an apparatus operated by the reviewer and used to confirm the document information and determine a classification code to be given.

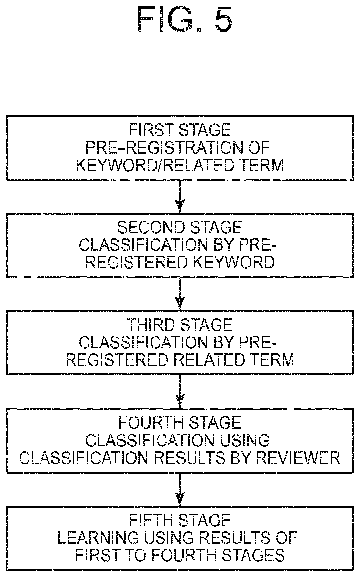

In the first embodiment, the classification processing is performed in five stages according to a flowchart as shown in FIG. 5.

In a first stage, keywords and related terms are pre-registered using the past results of classification processing. The keywords registered at this time are keywords to which the "Hot" code will be given immediately if the keywords are included in documents, such as the name of a function of the product A and the name of technology, which are deemed to be an infringement.

In a second stage, a document including any keyword registered in the first stage is searched for from all the pieces of document information, and when such a document is found, the "Hot" code is given.

In a third stage, any related term registered in the first stage is searched for from all the pieces of document information, and a score for a document including the related term is calculated and classified.

In a fourth stage, classification codes are automatically given based on the reviewer's classification rules after the reviewer determines classification codes.

In a fifth stage, learning is performed using the results of the first stage to the fourth stage.

<First Stage>

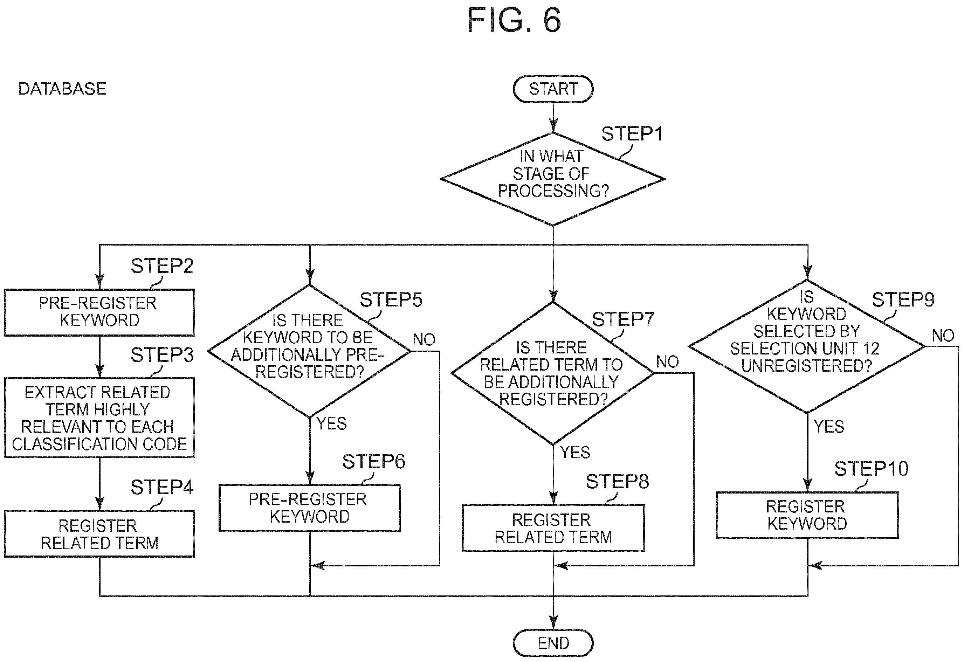

A processing flow of the database 200 in the first stage will be described in detail with reference to FIG. 6. It is determined in what stage of processing is performed on the database 200, and the first stage of processing is selected (STEP 1: first stage). In this stage, any keyword is first pre-registered in the database 200 (STEP 2). Registered at this time is a keyword determined, from the past results of classification processing, to have high relation to the product A and to be given the "Hot" code immediately if the keyword is included in any document. Likewise, any general term having high relation to a document group to which the "Hot" code is given because of high relation to the product A is extracted from the past results of classification processing (STEP 3), and registered as a related term (STEP 4).

<Second Stage>

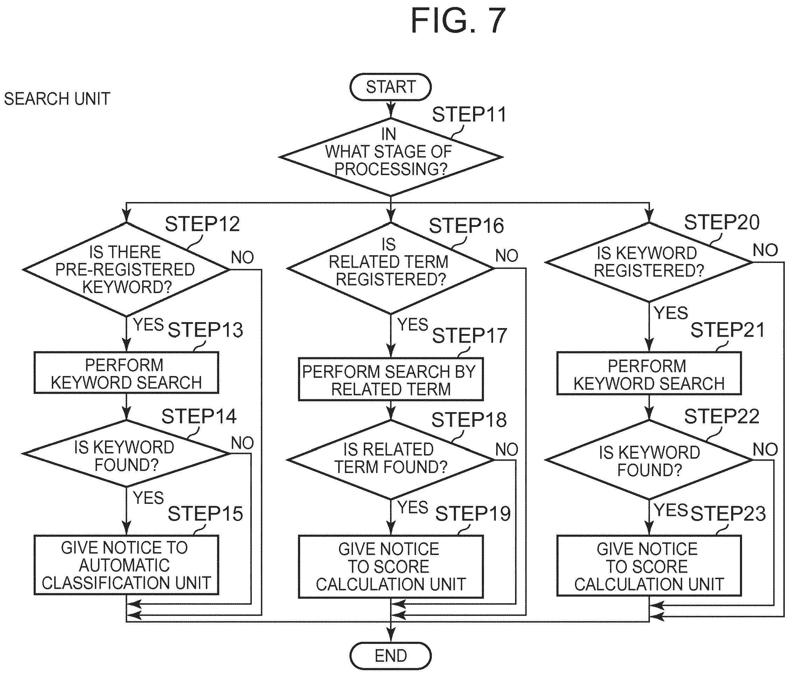

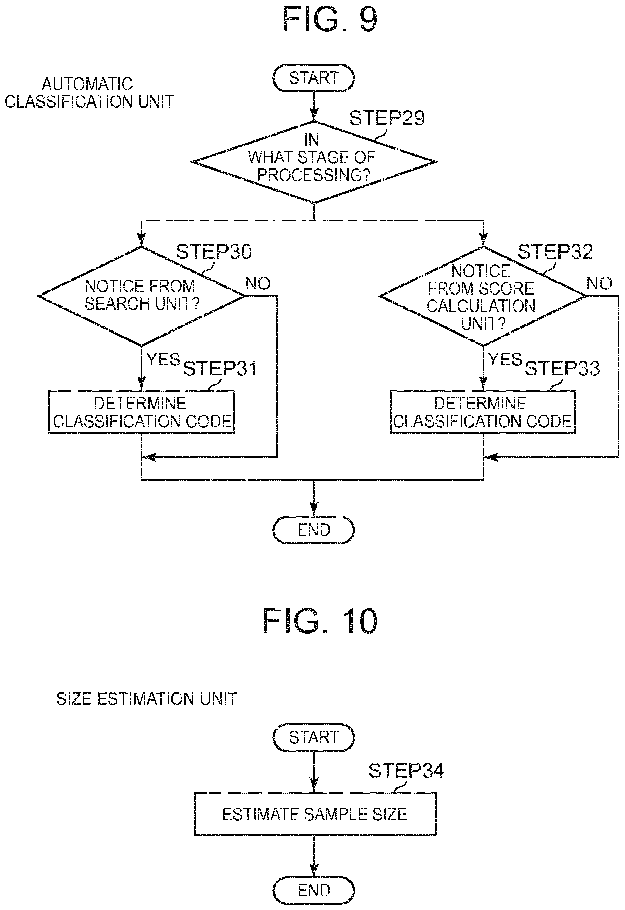

Processing flows of the database 200, the search unit 107, and the automatic classification unit 109 in the second stage will be described in detail with reference to FIG. 6, FIG. 7, and FIG. 9.

It is determined in what stage of processing is performed on the database 200, and the second stage of processing is selected (STEP 1: second stage). When there is any keyword necessary to be further pre-registered in the database 200 (STEP 5: YES), additional registration is performed (STEP 6). When there is no keyword to be additionally registered (STEP 5: NO) and after completion of the processing in STEP 6, it is determined in what stage of processing is performed in the search unit 107, and the second stage of processing is selected (STEP 11: second stage). In this stage, the search unit 107 first determines whether there is any keyword pre-registered in the database 200 in the first stage and the second stage (STEP 12). When there is no pre-registered keyword (STEP 12: NO), the second stage of processing is ended.

When there is any pre-registered keyword (STEP 12: YES), all the pieces of document information to be classified are searched to determine whether there is any document including the keyword in the document information to be classified (STEP 13). When there is no document including the keyword searched for (STEP 14: NO), the second stage of processing is ended. On the other hand, when there is any document including the keyword searched for is found (STEP 14: YES), notice is given to the automatic classification unit 109 (STEP 15).

When receiving the notice from the search unit 107 (STEP 29: second stage, and STEP 30: YES), the automatic classification unit 109 gives the "Hot" code to the document as the target of the notice, and ends the processing (STEP 31). When not receiving the notice from the search unit 107 (STEP 29: second stage, and STEP 30: NO), the automatic classification unit 109 does not perform any processing.

<Third Stage>

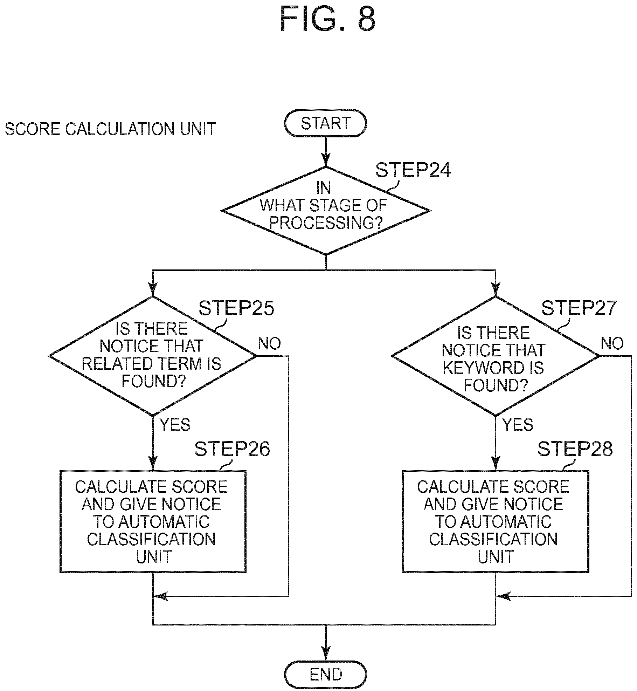

Processing flows of the database 200, the search unit 107, the score calculation unit 108, and the automatic classification unit 109 in the third stage will be described with reference to FIG. 6, FIG. 7, FIG. 8, and FIG. 9.

It is determined in what stage of processing is performed on the database 200, and the third stage of processing is selected (STEP 1: third stage). When there is any related term necessary to be further pre-registered in the database 200 (STEP 7: YES), additional registration is performed (STEP 8). When there is no need for additional registration of a related term (STEP 7: NO), the third stage of processing is ended.

After completion of processing in STEP 8, it is determined in what stage of processing is performed in the search unit 107, and the third stage of processing is selected (STEP 11: third stage). In this stage, the search unit 107 determines whether there is any related term registered in the database 200 in the first stage and the second stage (STEP 16). When there is no pre-registered keyword (STEP 16: NO), the third stage of processing is ended.

When there is a related term (STEP 16: YES), all the pieces of document information is searched to determine whether there is any document including the related term in the document information to be classified (STEP 17). When there is no document including the keyword searched for (STEP 18: NO), the third stage of processing is ended. On the other hand, when there is any document including the related term searched for (STEP 18: YES), notice is given to the score calculation unit 108 (STEP 19).

When receiving the notice from the search unit 107 (STEP 24: third stage, and STEP 25: YES), the score calculation unit 108 uses the above equation (11) to calculate a score for each document from the type of related term and the weighting of the related term found from the document and gives notice to the automatic classification unit 109 (STEP 26). When not receiving, from the search unit 107, the notice that a related term is found (STEP 24: third stage, and STEP 25: NO), the third stage of processing is ended.

When receiving the notice of the score from the score calculation unit 108 (STEP 29: third stage, and STEP 32: YES), the automatic classification unit 109 determines whether the score exceeds a threshold value document by document, and gives the "Hot" code to a document whose score exceeds the threshold value. When there is no score that exceeds the threshold value, the automatic classification unit 109 ends the processing without giving any code (STEP 33).

<Fourth Stage>

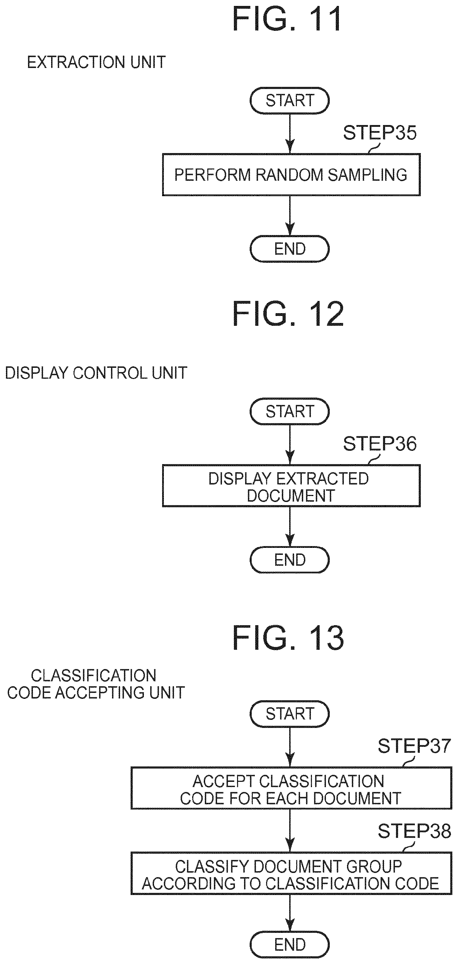

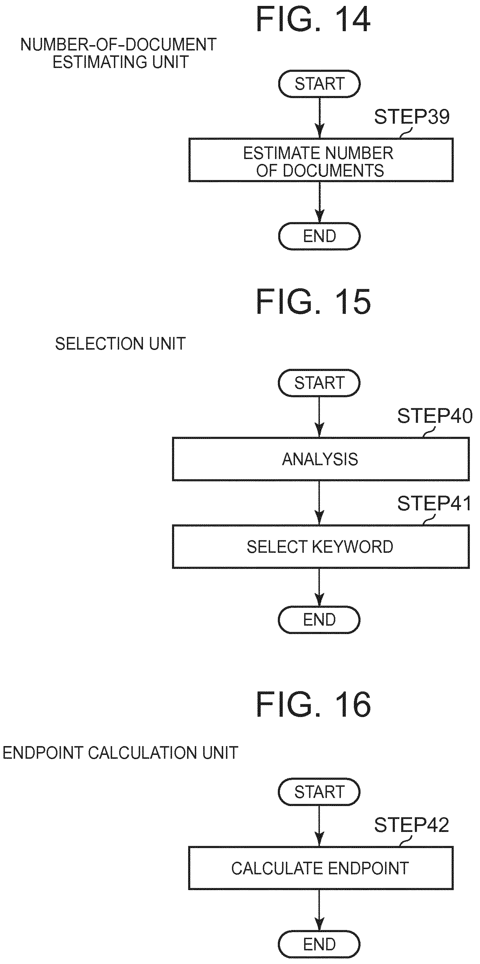

Processing flows of the database 200, the search unit 107, the score calculation unit 108, the automatic classification unit 109, the size estimation unit 101, the extraction unit 102, the display control unit 103, the classification code accepting unit 104, the selection unit 106, and the endpoint calculation unit 110 in the fourth stage will be described in detail with reference to FIG. 6 to FIG. 16, respectively.

In the fourth stage, the size estimation unit 101 first estimates the ratio of documents extracted from all the pieces of document information, i.e., the sample size to reduce the burden on the reviewer while keeping the reliability of the review results (STEP 34). Next, the extraction unit 102 samples documents from the document information to be classified at random according to the sample size estimated by the size estimation unit 101 to extract a document group as a target of giving classification codes manually by the reviewer (STEP 35). The display control unit 103 displays the extracted document group on the document display screen I1 (STEP 36).

The reviewer reads the content of each document in the document group displayed on the document display screen I1 to determine whether there is relation between the product A and the content of the document in order to determine whether to give the "Hot" code. The document to which the reviewer gives the "Hot" code is, for example, a report of the results of the prior art search on the product A, a letter of warning from another person or party that the manufacture of the product A is a patent infringement, or the like.

The classification code given by the reviewer is accepted by the classification code accepting unit 104 (STEP 37), and the document is classified according to the given classification code (STEP 38). The number-of-document estimating unit 105 estimates the number of documents included in the document information and relevant to the lawsuit based on the classification results of the document group accepted by the classification code accepting unit 104 (STEP 39). The estimated number of documents may be displayed on the client apparatus 300.

The selection unit 106 performs keyword analysis on each document classified in STEP 38 (STEP 40) to select a keyword appearing in common in documents given the "Hot" code and the number of appearances of which is large (STEP 41).

Next, when the keyword selected by the selection unit 106 in STEP 41 is unregistered in the database 200 as a keyword related to the "Hot" code indicative of relation to the product A (STEP 1: fourth stage, and STEP 9: YES), the keyword is registered. When the keyword is already registered, no processing is performed (STEP 1: fourth stage, and STEP 9: NO).

When the keyword related to the "Hot" code is not registered in the database 200 (STEP 20: NO), the search unit 107 ends the fourth stage of processing. When the keyword is registered (STEP 20: YES), the search unit 107 excludes the documents, extracted by the extraction unit 102 and classified by the reviewer, from search targets, and performs a keyword search of each of the remaining documents (STEP 21). When the keyword is found in the document during the search (STEP 22: YES), notice is given to the score calculation unit 108 (STEP 23).

When receiving the notice that the keyword is found (STEP 27: YES), the score calculation unit 108 uses the above equation (11) to calculate a score for each document, and gives notice to the automatic classification unit 109 (STEP 28).

When receiving the notice from the score calculation unit 108 (STEP 32: YES), the automatic classification unit 109 determines for each document whether the score exceeds a threshold value, gives the "Hot" code to documents whose scores exceed the threshold value, and ends the processing without giving the "Hot" code to the other documents whose scores do not exceed the threshold value (STEP 33). Further, the endpoint calculation unit 110 calculates the number of documents (endpoint) required when the reviewer performs confirmation review on the classification results of the document information classified by the automatic classification unit 109 (STEP 42).

<Fifth Stage>

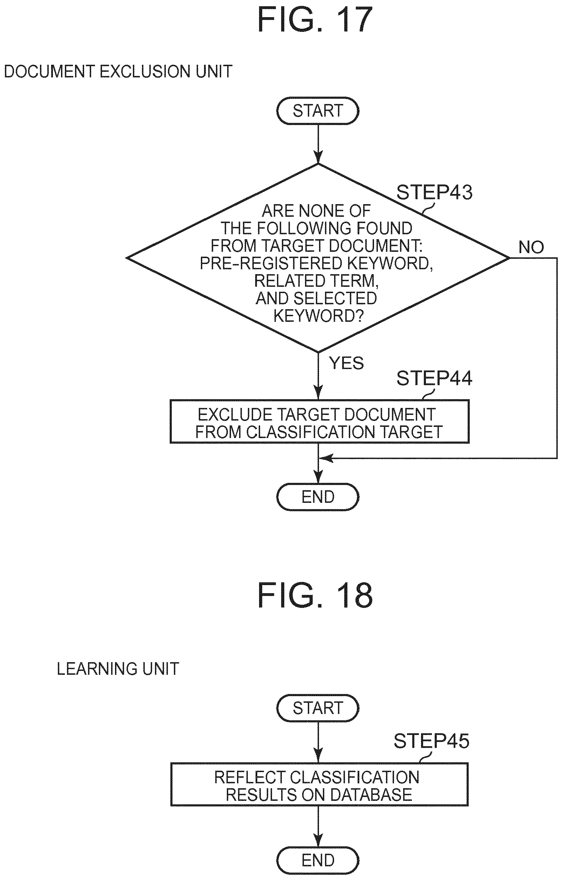

Processing flows of the document exclusion unit 111 and the learning unit 112 in the fifth stage will be described with reference to FIG. 17 and FIG. 18, respectively.

Among pieces of document information to be classified, the document exclusion unit 111 searches document groups on which the first to fourth stages of processing are not performed to determine whether there is any document including the keywords pre-registered in the first and second stages, the related terms registered in the first and third stages, and the keyword registered in the fourth stage, and when there is any document from which none of the keywords and related terms are found (STEP 43: YES), the document is excluded from the classification targets beforehand (STEP 44).

The learning unit 112 learns the weighting of each keyword according to the equation (12) based on the first to fourth processing results. The learning results are reflected on the database 200 (STEP 45).

[Variations of Embodiment]

Variations of the embodiment of the present invention will be described.

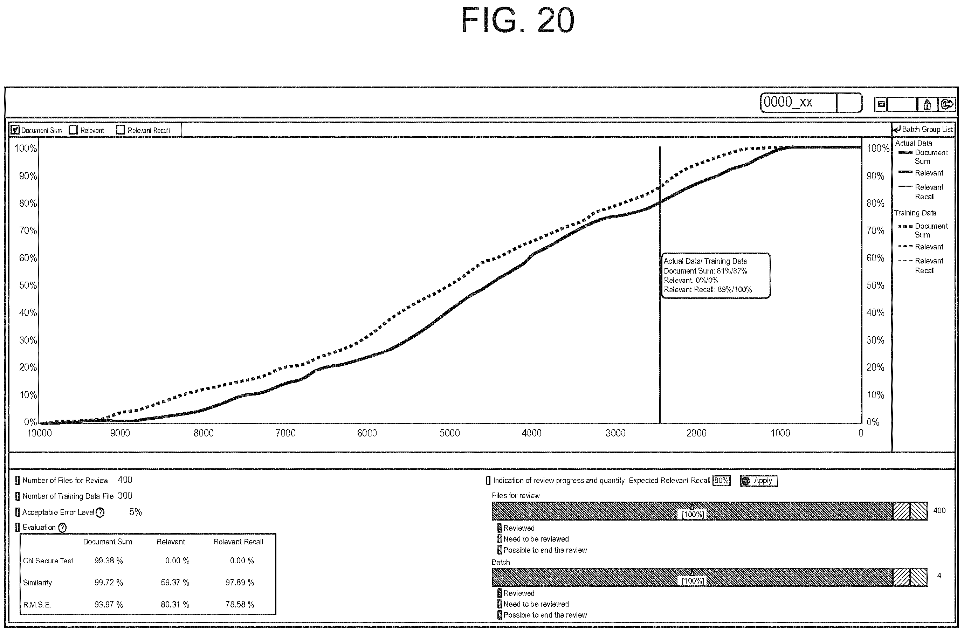

In the first embodiment, the display control unit 103 provides the document display screen I1 as shown in FIG. 19 to the client apparatus 300, but "Document Sum," "Relevant Recall," and "Relevant" as shown in FIGS. 20 to 22 may be displayed on the client apparatus 300.

In FIG. 20 to FIG. 22, the ordinate indicates percentage and the abscissa indicates the score. Further, the classification results of samples by the reviewer in terms of each of "Document Sum," "Relevant Recall," and "Relevant" are represented by a dotted line, and the classification results by the automatic classification unit 109 are represented by a solid line, respectively. In the lower right corner of each of FIG. 20 to FIG. 22, "Indication of review progress and quantity" (the review progress and quantity (the number of documents)) may be displayed (see the bar charts in the lower right corner).

The values (%) on the ordinate of "Document Sum" shown in FIG. 20 indicate numbers obtained as follows: The total number of documents is set as the denominator, and 1 to 10000 score values are divided as each numerator at intervals of a value set for the system parameter, and the number of documents as each denominator corresponding to the divided score range is accumulated in descending order of score.

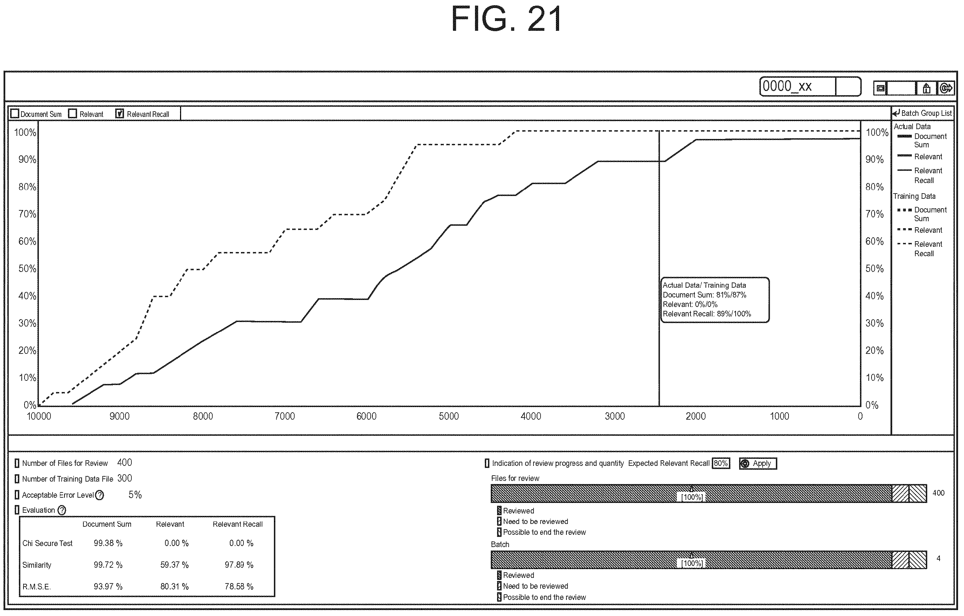

The values (%) on the ordinate of "Relevant Recall" shown in FIG. 21 are values in which each denominator is the number of documents with a Relevant tag attached among the total number of documents and each numerator is the number of documents with the Relevant tag attached (documents relevant to the lawsuit and considered necessary to be submitted) among the documents as the denominator.

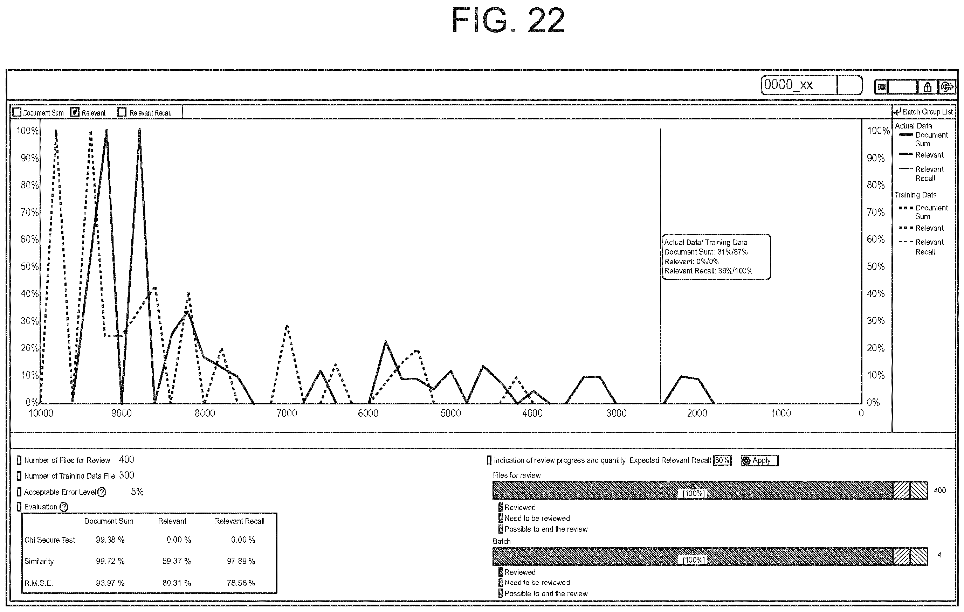

The values (%) on the ordinate of "Relevant" shown in FIG. 22 are values in which each denominator is the number of documents corresponding to each score range obtained by dividing 1 to 10000 score values at the intervals of the value set for the system parameter, and each numerator is the number of documents with the Relevant (having relation) tag attached among the documents as the denominator.

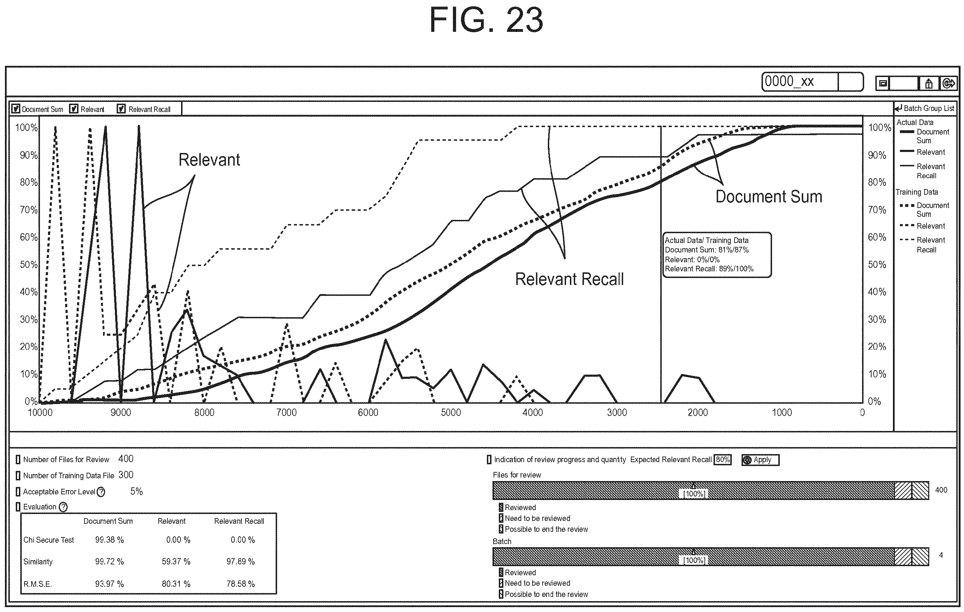

Note that the bar charts "Indication of review progress and quantity" may be displayed on another screen different from those of "Document Sum," "Relevant Recall," and "Relevant." Further, "Document Sum," "Relevant Recall," and "Relevant" are displayed individually in FIGS. 20 to 22, but these may be all displayed as shown in FIG. 23. Note that the dotted lines and the solid lines in FIG. 23 have the same meanings as the dotted lines and the solid lines in FIG. 20 to FIG. 22.

The configuration may also be such that the user can selectively display any one or more of "Document Sum," "Relevant Recall," and "Relevant" on the screen of the client apparatus 300. In this case, "Document Sum," "Relevant Recall," and "Relevant" can be visually recognized at the same time, improving user-friendliness.

Note that the likelihood of the dotted lines (sample classification results) and the solid lines (classification results by the automatic classification unit 109) in FIG. 20 to FIG. 22 mentioned above (i.e., how well both the classification results match (are similar or approximate to) each other) can be evaluated by "Chi-squared test," "Similarity," or "RMSE."

"Chi-squared test"

It is a basic statistical evaluation technique capable of determining the similarity even if the number of samples is small.

"Similarity"

The "Similarity" is an inner product of two functions, which is expressed in the following equation (13):

$$Sim_{s \cdot d} = \frac{\sum_{i=1}^{n}(y_{si} \cdot y_{di})}{\sum_{i=1}^{n}(y_{si}^2)\sum_{i=1}^{n}(y_{di}^2)} \quad \cdots \quad (13)$$

where

$y_{si}$ is y value (Recall) of the i-th sample.
$y_{di}$ is y value (Recall) of the i-th document (in all the documents).
n is the number of a data point in the sample.

Recall is a function of the normalized rank, and in this case, the similarity between the two functions (Recall and normalized rank) is given using the inner product of all data in the samples.

"RMSE" (Root-mean-square error)

"RMSE" is expressed in the following equation (14):

$$RMSE_{s \cdot d} = \sqrt{\frac{1}{n}\sum_{i=1}^{n}(y_{di} - y_{si})^2} \quad \cdots \quad (14)$$

where

$y_{si}$ is y value (Recall) of the i-th sample.
$y_{di}$ is y value (Recall) of the i-th document (in all the documents).
n is the number of a data point in the sample.

"RMSE" shows an uncorrelated mean error. However, this error is an indicator of how close (similar) between data on the sample and data on all the documents.

[Other Embodiments]

Other embodiments of the present invention will be described.

In the first embodiment, the description is made of the example in the patent infringement case, but the document classification system in the present invention can be employed in all kinds of lawsuits where the eDiscovery (electronic discovery) system is adopted and there is an obligation to submit documents, such as a cartel or antitrust act.

Further, in the first embodiment, the fourth stage of processing for automatically giving classification codes based on the reviewer's classification rules is performed after the first stage to the third stage of processing, but only the fourth stage of processing may be performed independently without performing the first stage to the third stage of processing.

Further, such an embodiment that some document groups are extracted by the extraction unit 102 from the document information, and the fourth stage of processing is first performed on the extracted document groups, and after that, the first stage to the third stage of processing are performed based on any keyword registered in the fourth stage may be adopted.

In the fourth stage of the first embodiment, the search unit 107 performs a search of documents, the classification codes of which have not been accepted by the classification code accepting unit 104, for the keyword selected by the selection unit 106, but the keyword search may also be performed on all the pieces of document information.

In the fourth stage of the first embodiment, only documents, the classification codes of which have not been accepted by the classification code accepting unit 104, are automatically given classification codes by the automatic classification unit 109, but all the pieces of document information may be automatically given classification codes.

Since the document classification system, the document classification method, and the document classification program according to the present invention estimate the proper size of a document group as a data set including a predetermined number of documents to be extracted from document information, and extract the document group in this estimated size from the document information so that the user will give classification codes based on relation to the lawsuit, the reviewer's classification labor can be reduced.

Further, since the number of documents included in the document information and relevant to the lawsuit is estimated based on the classification results of a document group accepted by the classification code accepting unit, it can easily understand how many documents are relevant to the lawsuit.

Further, since the number of documents required when the user (reviewer) performs confirmation review of the classification results of the document information classified by the automatic classification unit is calculated, there is no need to perform confirmation review of unnecessarily many documents. Therefore, the reviewer's classification labor can be reduced.

Further, when the document classification system of the present invention is configured such that the search unit has a function of searching for a keyword from document information composed of documents the classification codes of which are not given, and the score calculation unit has a function of calculating a score indicative of relation between a classification code and a document using the search results of the search unit and the analysis result of the selection unit, and the automatic classification unit has a function of extracting documents the classification codes of which have not been accepted by the classification code accepting unit and automatically giving classification codes to the documents, the classification codes can be automatically given based on the reviewer's classification rules to the document information the giving of classification codes of which have not been accepted by the classification code accepting unit.

Further, when the present invention is configured to include the learning unit for increasing or decreasing keywords and related terms having a correlation with a classification code selected by the selection unit and recorded in the database based on the analysis results of the selection unit and the scores calculated by the score calculation unit, classification precision can be improved in the course of repeating the classification.

Further, when the present invention is configured such that the database extracts and records a related term having a correlation with a classification code, the search unit searches document information for the related term, the score calculation unit calculates a score based on the results of the related term search by the search unit, the automatic classification unit automatically gives the classification code based on the score calculated using the related term, and the selection unit selects, from among the documents included in a document group, documents that do not include the selected keyword, related term, and the keyword having the correlation with the classification code so that document classification can be performed more efficiently when the selected documents are excluded from classification targets of the automatic classification unit. This makes easy use of collected digital information in the lawsuit.

Description of Reference Numerals

| | |
|---|---|
| 100 | document classification apparatus |
| 101 | size estimation unit |
| 102 | extraction unit |
| 103 | display control unit |
| 104 | classification code accepting unit |
| 105 | number-of-document estimating unit |
| 106 | selection unit |
| 107 | search unit |
| 108 | score calculation unit |
| 109 | automatic classification unit |
| 110 | endpoint calculation unit |
| 111 | document exclusion unit |
| 112 | learning unit |
| 200 | database |
| 300 | client apparatus |

**Claims**

1. A document classification system that acquires digital information recorded on a plurality of computers or servers, analyzing document information included in the acquired digital information, and classifying the document information to make easy use of the document information in a lawsuit, **characterized by** comprising:

   an extraction unit for extracting a document group as a data set including a predetermined number of documents from the document information;
   a classification code accepting unit for accepting classification codes given to the extracted document group by a user based on relation to the lawsuit;
   a selection unit for classifying the extracted document group by classification code based on the classification codes, and analyzing and selecting a keyword appearing in common in the classified document group;
   a search unit for searching the document information for the selected keyword;
   a score calculation unit for calculating a score indicative of relation between a classification code and a document using search results of the search unit and analysis results of the selection unit;
   an automatic classification unit for automatically giving classification codes to the document information based on the score results; and
   a display control unit for performing control to display, on a screen, calculation results of the score calculation unit and/or classification results of the automatic classification unit.

2. The document classification system according to claim 1, **characterized in that**
   the display control unit divides the scores calculated by the score calculation unit into a plurality of ranges, and displays numbers obtained by accumulating the number of documents included in each range of the plurality of ranges in descending order of score.

3. The document classification system according to claim 1 or claim 2, **characterized in that**
   the display control unit displays a ratio of documents relevant to the lawsuit to the total number of documents.

4. The document classification system according to any one of claim 1 to claim 3, **characterized in that**
   the display control unit divides the scores calculated by the score calculation unit into a plurality of ranges, and displays a ratio of the number of documents relevant to the lawsuit in each range of the plurality of ranges.

5. The document classification system according to any one of claim 1 to claim 4, **characterized by** further comprising a size estimation unit for estimating a proper size of a document group as a data set including a predetermined number of documents to be extracted from the document information,
   wherein the extraction unit extracts, from the document information, a document group in a size estimated by the size estimation unit.

6. The document classification system according to any one of claim 1 to claim 5, **characterized by** further comprising a number-of-document estimating unit for estimating the number of documents included in the document information and relevant to the lawsuit based on classification results of the document group accepted by the classification code accepting unit.

7. The document classification system according to claim 6, **characterized in that**
the number-of-document estimating unit estimates the number of documents included in the document information and relevant to the lawsuit based on a ratio of the number of documents to the extracted document group, where the number of documents is determined to be relevant to the lawsuit as a result of the classification.

8. The document classification system according to any one of claim 1 to claim 7, **characterized by** further comprising a number-of-document calculating unit for calculating the number of documents required when the user performs confirmation review on classification results of the document information classified by the automatic classification unit.

9. The document classification system according to claim 8, **characterized in that** the number-of-document calculating unit calculates the number of documents required for the confirmation review based on a relationship between a document determined to be relevant to the lawsuit by the automatic classification unit and a score calculated by the score calculation unit.

10. The document classification system according to claim 9, **characterized in that**
the number-of-document calculating unit calculates the number of documents required for the confirmation review based on a relationship between a recall as a ratio of documents, determined to be relevant to the lawsuit by the automatic classification unit, to documents relevant to the lawsuit in the document information, and a normalized rank obtained by dividing a rank of the score calculated by the score calculation unit by the number of documents included in the document information.

11. The document classification system according to claim 10, **characterized in that** the relationship between the recall and the normalized rank is calculated by nonlinear regression analysis.

12. The document classification system according to claim 11, **characterized in that** the number of documents required for the confirmation review is calculated based on a value of the normalized rank in which a value of the recall is saturated when the value of the normalized rank is increased in the relationship between the recall and the normalized rank calculated by the nonlinear regression analysis.

13. The document classification system according to any one of claim 8 to claim 12, **characterized in that**
the display control unit displays, on the screen, the number of documents calculated by the number-of-document calculating unit and required when the user performs confirmation review.

14. A document classification method for acquiring digital information recorded on a plurality of computers or servers, analyzing document information included in the acquired digital information, and classifying the document information to make easy use of the document information in a lawsuit, comprising:

   extracting a document group as a data set including a predetermined number of documents from the document information;
   accepting classification codes given to the extracted document group by a user based on relation to the lawsuit;
   classifying the extracted document group by classification code based on the classification codes, and analyzing and selecting a keyword appearing in common in the classified document group;
   searching the document information for the selected keyword;
   calculating a score indicative of relation between a classification code and a document using search results of the search unit and analysis results of the selection unit;
   automatically giving classification codes to the document information based on the score results; and
   performing control to display, on a screen, the score results and/or classification results of the automatic classification.

15. A document classification program used in a document classification system that acquires digital information recorded on a plurality of computers or servers, analyzing document information included in the acquired digital information, and classifying the document information to make easy use of the document information in a lawsuit, the program causing a computer to implement:

a function of extracting a document group as a data set including a predetermined number of documents from the document information;

a function of accepting classification codes given to the extracted document group by a user based on relation to the lawsuit;

a function of classifying the extracted document group by classification code based on the classification codes, and analyzing and selecting a keyword appearing in common in the classified document group;

a function of searching the document information for the selected keyword;

a function of calculating a score indicative of relation between a classification code and a document using search results of the search unit and analysis results of the selection unit;

a function of automatically giving classification codes to the document information based on the score results; and

a function of performing control to display, on a screen, the score results and/or classification results of the automatic classification.

# FIG. 1

100

| 102 | 111 | 112 |
|---|---|---|
| EXTRACTION UNIT | DOCUMENT EXCLUSION UNIT | LEARNING UNIT |

106 — SELECTION UNIT

109 — AUTOMATIC CLASSIFICATION UNIT

104 — CLASSIFICATION CODE ACCEPTING UNIT

107 — SEARCH UNIT

103 — DISPLAY CONTROL UNIT

108 — SCORE CALCULATION UNIT

105 — NUMBER-OF-DOCUMENT ESTIMATING UNIT

110 — ENDPOINT CALCULATION UNIT

101 — SIZE ESTIMATION UNIT

200

DATABASE

300

CLIENT APPARATUS

FIG. 2

Sample size vs error level

$$n_s \approx \frac{1}{4}\frac{r^2}{\Delta p^2}$$

C.L.=99%
C.L.=95%

Error level ($\Delta p$)

Sample size

# FIG. 3

R_hot vs R_all

FIG. 4

Recall vs Normalized Rank (P1)

# FIG. 5

```
┌─────────────────────────────────┐
│           FIRST STAGE           │
│        PRE-REGISTRATION OF       │
│       KEYWORD/RELATED TERM       │
└─────────────────────────────────┘
                 │
                 ▼
┌─────────────────────────────────┐
│          SECOND STAGE           │
│       CLASSIFICATION BY PRE-     │
│        REGISTERED KEYWORD        │
└─────────────────────────────────┘
                 │
                 ▼
┌─────────────────────────────────┐
│           THIRD STAGE           │
│       CLASSIFICATION BY PRE-     │
│      REGISTERED RELATED TERM     │
└─────────────────────────────────┘
                 │
                 ▼
┌─────────────────────────────────┐
│          FOURTH STAGE           │
│       CLASSIFICATION USING       │
│  CLASSIFICATION RESULTS BY REVIEWER │
└─────────────────────────────────┘
                 │
                 ▼
┌─────────────────────────────────┐
│           FIFTH STAGE           │
│     LEARNING USING RESULTS OF    │
│       FIRST TO FOURTH STAGES     │
└─────────────────────────────────┘
```

# FIG. 6

DATABASE

START

STEP1
IN WHAT STAGE OF PROCESSING?

STEP2
PRE-REGISTER KEYWORD

STEP3
EXTRACT RELATED TERM HIGHLY RELEVANT TO EACH CLASSIFICATION CODE

STEP4
REGISTER RELATED TERM

STEP5
IS THERE KEYWORD TO BE ADDITIONALLY PRE-REGISTERED?
NO
YES

STEP6
PRE-REGISTER KEYWORD

STEP7
IS THERE RELATED TERM TO BE ADDITIONALLY REGISTERED?
NO
YES

STEP8
REGISTER RELATED TERM

STEP9
IS KEYWORD SELECTED BY SELECTION UNIT 12 UNREGISTERED?
NO
YES

STEP10
REGISTER KEYWORD

END

EP 3 029 582 A1

# FIG. 7

SEARCH UNIT

START

STEP11
IN WHAT STAGE OF PROCESSING?

STEP12
IS THERE PRE-REGISTERED KEYWORD?  NO

YES STEP13
PERFORM KEYWORD SEARCH

STEP14
IS KEYWORD FOUND?  NO

YES STEP15
GIVE NOTICE TO AUTOMATIC CLASSIFICATION UNIT

STEP16
IS RELATED TERM REGISTERED?  NO

YES STEP17
PERFORM SEARCH BY RELATED TERM

STEP18
IS RELATED TERM FOUND?  NO

YES STEP19
GIVE NOTICE TO SCORE CALCULATION UNIT

STEP20
IS KEYWORD REGISTERED?  NO

YES STEP21
PERFORM KEYWORD SEARCH

STEP22
IS KEYWORD FOUND?  NO

YES STEP23
GIVE NOTICE TO SCORE CALCULATION UNIT

END

EP 3 029 582 A1

# FIG. 8

SCORE CALCULATION UNIT

START

STEP24
IN
WHAT STAGE OF
PROCESSING?

STEP25
IS THERE
NOTICE THAT
RELATED TERM IS
FOUND?

NO

YES

STEP26
CALCULATE SCORE
AND GIVE NOTICE
TO AUTOMATIC
CLASSIFICATION
UNIT

STEP27
IS THERE
NOTICE THAT
KEYWORD IS
FOUND?

NO

YES

STEP28
CALCULATE SCORE
AND GIVE NOTICE
TO AUTOMATIC
CLASSIFICATION
UNIT

END

# FIG. 9

AUTOMATIC
CLASSIFICATION UNIT

START

STEP29

IN WHAT STAGE OF PROCESSING?

STEP30

NOTICE FROM SEARCH UNIT? — NO

YES STEP31

DETERMINE CLASSIFICATION CODE

STEP32

NOTICE FROM SCORE CALCULATION UNIT? — NO

YES STEP33

DETERMINE CLASSIFICATION CODE

END

# FIG. 10

SIZE ESTIMATION UNIT

START

STEP34

ESTIMATE SAMPLE SIZE

END

# FIG. 11

EXTRACTION UNIT

```
        START
          │
          ▼           STEP35
┌──────────────────────────┐
│ PERFORM RANDOM SAMPLING  │
└──────────────────────────┘
          │
          ▼
         END
```

# FIG. 12

DISPLAY CONTROL UNIT

```
        START
          │
          ▼           STEP36
┌──────────────────────────┐
│    DISPLAY EXTRACTED     │
│       DOCUMENT           │
└──────────────────────────┘
          │
          ▼
         END
```

# FIG. 13

CLASSIFICATION
CODE ACCEPTING UNIT

```
        START
          │
          ▼                      STEP37
┌────────────────────────────────┐
│    ACCEPT CLASSIFICATION       │
│   CODE FOR EACH DOCUMENT        │
└────────────────────────────────┘
          │
          ▼                      STEP38
┌────────────────────────────────┐
│   CLASSIFY DOCUMENT GROUP      │
│ ACCORDING TO CLASSIFICATION CODE│
└────────────────────────────────┘
          │
          ▼
         END
```

# FIG. 14

NUMBER-OF-DOCUMENT
ESTIMATING UNIT

```
        ( START )
            │
            ▼                STEP39
  ┌─────────────────────┐
  │  ESTIMATE NUMBER    │
  │   OF DOCUMENTS      │
  └─────────────────────┘
            │
            ▼
         ( END )
```

# FIG. 15

SELECTION UNIT

```
        ( START )
            │
            ▼                STEP40
  ┌─────────────────────┐
  │     ANALYSIS        │
  └─────────────────────┘
            │
            ▼                STEP41
  ┌─────────────────────┐
  │   SELECT KEYWORD    │
  └─────────────────────┘
            │
            ▼
         ( END )
```

# FIG. 16

ENDPOINT CALCULATION UNIT

```
        ( START )
            │
            ▼                STEP42
  ┌─────────────────────┐
  │  CALCULATE ENDPOINT │
  └─────────────────────┘
            │
            ▼
         ( END )
```

# FIG. 17

DOCUMENT EXCLUSION UNIT

START

STEP43

ARE NONE OF
THE FOLLOWING FOUND
FROM TARGET DOCUMENT:
PRE-REGISTERED KEYWORD,
RELATED TERM,
AND SELECTED
KEYWORD?

NO

YES

STEP44

EXCLUDE TARGET DOCUMENT
FROM CLASSIFICATION TARGET

END

# FIG. 18

LEARNING UNIT

START

STEP45

REFLECT CLASSIFICATION
RESULTS ON DATABASE

END

# FIG. 19

DOCUMENT DISPLAY SCREEN

I1

☐ CLASSIFICATION CODE 1
☐ CLASSIFICATION CODE 2
　· SMALL CLASSIFICATION 1
　· SMALL CLASSIFICATION 2
☐ CLASSIFICATION CODE 3

◁　▷

DOCUMENT TO BE CLASSIFIED

# FIG. 20

# FIG. 21

EP 3 029 582 A1

# FIG. 22

EP 3 029 582 A1

# FIG. 23

EP 3 029 582 A1

☑ Document Sum  ☑ Relevant  ☑ Relevant Recall

↵ Batch Group List

Relevant

Document Sum

Actual Data/ Training Data
Document Sum: 81%/87%
Relevant: 0%/0%
Relevant Recall: 89%/100%

Relevant Recall

Actual Data
▬▬ Document Sum
── Relevant
── Relevant Recall

Training Data
▪▪▪ Document Sum
- - - Relevant
- - - Relevant Recall

X-axis: 10000, 9000, 8000, 7000, 6000, 5000, 4000, 3000, 2000, 1000, 0

Y-axis (both sides): 0%, 10%, 20%, 30%, 40%, 50%, 60%, 70%, 80%, 90%, 100%

⊟ Number of Files for Review   400
⊟ Number of Training Data File  300
⊟ Acceptable Error Level ⑦   5%
⊟ Evaluation ⑦

| | Document Sum | Relevant | Relevant Recall |
|---|---|---|---|
| Chi Secure Test | 99.38 % | 0.00 % | 0.00 % |
| Similarity | 99.72 % | 59.37 % | 97.89 % |
| R.M.S.E. | 93.97 % | 80.31 % | 78.58 % |

⊟ Indication of review progress and quantity  Expected Relevant Recall [80%]  ⊛ Apply

Files for review
[100%]  400
§ Reviewed
▨ Need to be reviewed
⊟ Possible to end the review

Batch
[100%]  4
§ Reviewed
▨ Need to be reviewed
⊟ Possible to end the review

0000_xx

## INTERNATIONAL SEARCH REPORT

| International application No. |
|---|
| PCT/JP2014/057097 |

**A.  CLASSIFICATION OF SUBJECT MATTER**
*G06F17/30(2006.01)i*

According to International Patent Classification (IPC) or to both national classification and IPC

**B.   FIELDS SEARCHED**

Minimum documentation searched (classification system followed by classification symbols)
G06F17/30

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

**C.   DOCUMENTS CONSIDERED TO BE RELEVANT**

| Category* | Citation of document, with indication, where appropriate, of the relevant passages | Relevant to claim No. |
|---|---|---|
| Y<br>A | JP 2011-170786 A  (Nomura Research Institute, Ltd.),<br>01 September 2011 (01.09.2011),<br>paragraphs [0020], [0030], [0043] to [0050], [0063] to [0066], [0076] to [0077]; fig. 7, 10 to 12, 15 to 16<br>(Family: none) | 1-9,13-15<br>10-12 |
| Y<br>A | JP 2011-209930 A  (UBIC, Inc.),<br>20 October 2011 (20.10.2011),<br>paragraph [0101]<br>& US 2012/0246185 A1    & EP 2509024 A1<br>& WO 2011/122431 A1    & CN 102696039 A<br>& KR 10-2013-0018641 A | 1-9,13-15<br>10-12 |

| ☒  Further documents are listed in the continuation of Box C. | ☐   See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 11 April, 2014 (11.04.14) | 22 April, 2014 (22.04.14) |

| Name and mailing address of the ISA/<br>Japanese Patent Office | Authorized officer |
|---|---|
| Facsimile No. | Telephone No. |

Form PCT/ISA/210 (second sheet) (July 2009)

**INTERNATIONAL SEARCH REPORT**

| International application No. |
| --- |
| PCT/JP2014/057097 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2009-98811 A  (Toshiba Corp.),<br>07 May 2009 (07.05.2009),<br>paragraphs [0010] to [0022]; fig. 4 to 5<br>(Family: none) | 1-15 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011209930 A
- JP 2011209931 A

- JP 2012032859 A